# EUROPÄISCHE PATENTSCHRIFT

(11) **EP 1 350 744 B1**
(45) Veröffentlichungstag und Bekanntmachung des Hinweises auf die Patenterteilung: **02.11.2006**
(21) Anmeldenummer: 03004708.8
(22) Anmeldetag: 04.03.2003
(51) Int. Cl.: B65G 53/46

(54) **Durchblas-Schleuse**
Rotary valve
Vanne à roue cellulaire

(30) Priorität: 04.04.2002 DE 10214786
(43) Veröffentlichungstag der Anmeldung: 08.10.2003
(73) Patentinhaber: Coperion Waeschle GmbH & Co. KG, 88250 Weingarten (DE)
(72) Erfinder: Ernst, Reinhard, Dipl.-Ing., 88250 Weingarten (DE); Soretz, Christian, Dipl.-Ing., 88212 Ravensburg (DE); Zinser, Bruno, Dipl.-Ing. (BA), 88289 Waldburg (DE)
(74) Vertreter: Rau, Manfred

(56) Entgegenhaltungen:
- DE-A1- 19 537 429
- DE-A1- 19 901 967

## Beschreibung

Die Erfindung betrifft eine Durchblas-Schleuse nach dem Oberbegriff des Anspruches 1. Eine solche Durchblas-Schleuse ist beispielsweise aus DE 199 06 495 bekannt.

Bei Durchblas-Schleusen tritt das grundsätzliche Problem auf, dass einerseits bei einem zu engen Querschnitt des Durchblas-Kanals ein zu hoher Druckverlust in der Schleuse auftritt, was sich nachteilig auf die Förderleistung auswirkt. Weist der Durchblas-Kanal einen zu großen Querschnitt auf, so wird er nicht ausgeräumt; es tritt eine Kontamination der Schleuse durch Schüttgut auf. Bei einer Durchblas-Schleuse der gattungsgemäßen Art sind der Einlass-Kanal und der Auslass-Kanal, die jeweils in entsprechenden Stutzen der Deckel ausgebildet sind, zur Mittel-Achse des Zellenrades schräg angestellt, sodass ihr Querschnitt im Vergleich zu einer achsparallelen Zuführung vergrößert werden kann. Das Problem eines zu hohen Druckverlustes innerhalb des Gehäuses ist damit nicht gelöst. Wird der Querschnitt der Rinne dem entsprechenden Bereich des Einlass-Kanals bzw. des Auslass-Kanals angepasst, so besteht wiederum die Gefahr, dass der Durchblas-Kanal nicht vollständig geräumt wird.

Der Erfindung liegt die Aufgabe zugrunde, eine Durchblas-Schleuse der gattungsgemäßen Art so auszugestalten, dass einerseits eine schonende Förderung des Schüttgutes erreicht und andererseits eine Kontamination durch Schüttgut vermieden wird.

Diese Aufgabe wird erfindungsgemäß durch die Merkmale im Kennzeichnungsteil des Anspruches 1 gelöst. Durch die Ausbildung der Rampen am Anfang und am Ende der Rinne wird erreicht, dass der Durchblas-Kanal im Gehäuse am Anfang und Ende einen großen Querschnitt hat, wodurch eine schonende Förderung des Schüttguts erreicht wird. Andererseits hat er über einen erheblichen Teil seiner Länge den ausreichend engen Querschnitt, um sicherzustellen, dass der Durchblas-Kanal leergeräumt wird, also keine Schüttgut-Kontamination auftritt.

Anspruch 2 gibt eine optimale Ausgestaltung der Rinne mit den Rampen wieder.

Durch die weitere Ausgestaltung nach den Ansprüchen 3 bis 5 wird erreicht, dass am Übergang vom Einlass-Kanal zur Einlass-Rampe und am Übergang von der Auslass-Rampe zum Auslass-Kanal keine Störkanten vorhanden sind, an denen ein Kornbruch auftreten könnte. Durch die spezielle Ausgestaltung ist es auch möglich, die beiden Deckel absolut identisch auszubilden. Der Rücksprung im Bereich der Einlass-Rampe und die Vorsprung im Bereich der Auslass-Rampe wird jeweils im Gehäuse und nicht im Deckel realisiert.

Die Rücksprünge zur Vermeidung von Störkanten sind besonders vorteilhaft bei der erfindungsgemäßen Ausgestaltung des Durchblas-Kanals mit einer Einlass-Rampe und einer Auslass-Rampe. Sie können aber auch mit Vorteil eingesetzt werden, wenn die Rinne über die Länge des Gehäuses mit gleichbleibendem Querschnitt ausgebildet ist, diese Rampen also nicht aufweist.

Ein Ausführungsbeispiel der Erfindung wird nachfolgend anhand der Zeichnung näher erläutert. Es zeigt
- Fig. 1: einen Längsschnitt durch eine Durchblas-Schleuse nach der Erfindung,
- Fig. 2: einen Querschnitt durch die Durchblas-Schleuse entsprechend der Schnittlinie II-II in Fig. 1,
- Fig. 3: den Übergang zum Einlass-Kanal in den Durchblas-Kanal entsprechend dem Ausschnitt III in Fig. 1 in vergrößertem Maßstab, und
- Fig. 4: den Übergang vom Durchblas-Kanal zum Auslass-Kanal entsprechend dem Ausschnitt IV in Fig. 1 in vergrößertem Maßstab.

Die in der Zeichnung dargestellte Durchblas-Schleuse weist ein Gehäuse 1 auf, in dessen im wesentlichen ringzylindrischen Innenraum 2 ein als Zellenrad 3 ausgebildeter Rotor angeordnet ist. An der Oberseite des Gehäuses 1 ist ein Zuführ-Trichter 1a ausgebildet, der in den Innenraum 2 einmündet. Das Zellenrad 3 ist mittels Achs-Zapfen 4 in Lagern 5 gelagert, die an den den Innenraum 2 stirnseitig abschließenden, zueinander identischen Deckeln 6, 7 ausgebildet sind. Der Antrieb des Zellenrades 3 erfolgt mittels eines Elektro-Motors 8 über ein Getriebe 9.

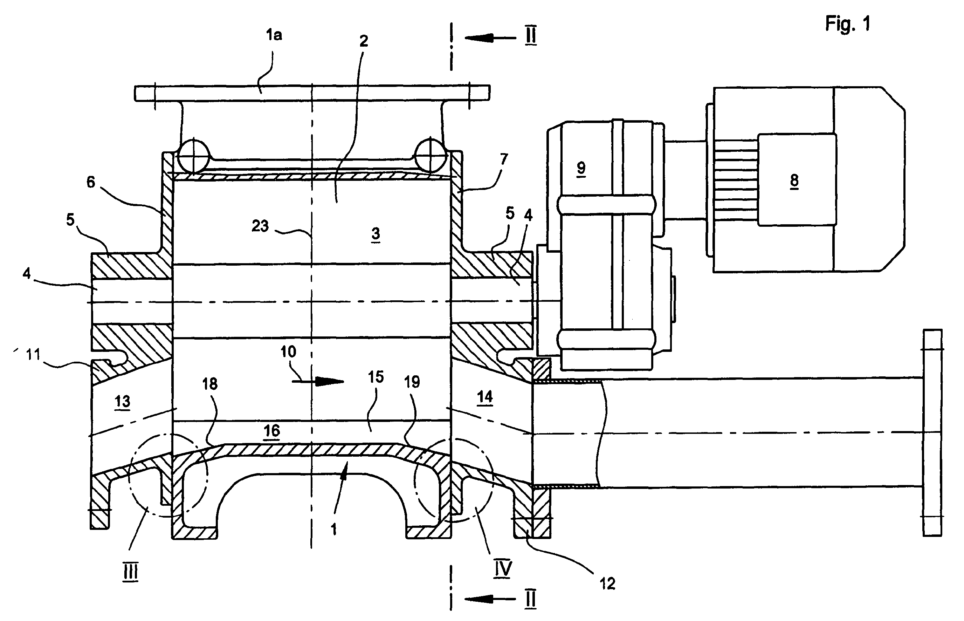

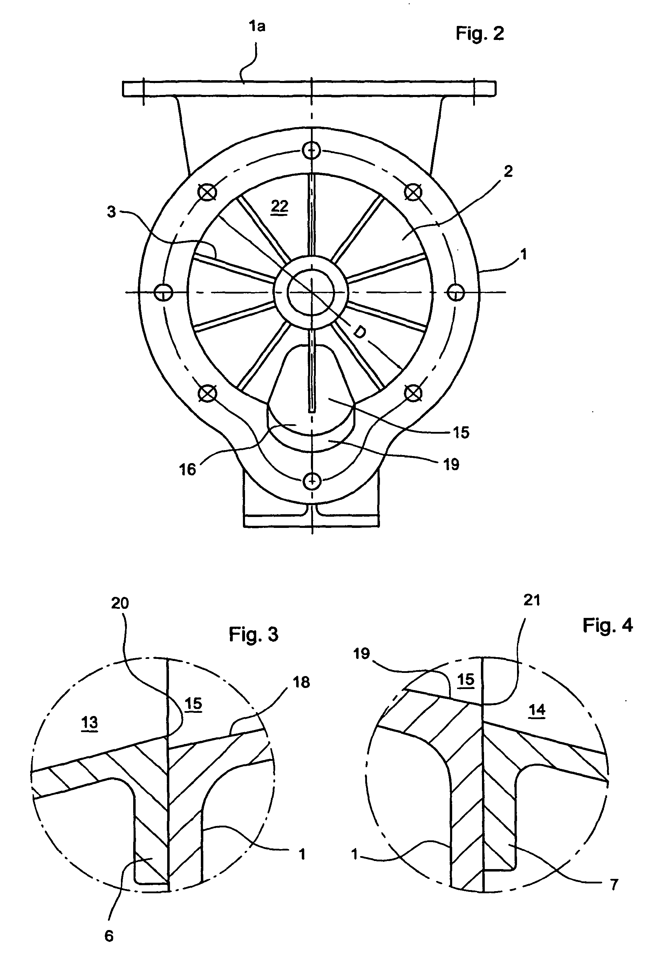

An dem - bezogen auf die Transport-Richtung 10 - stromaufwärtigen Deckel 6 ist ein Einlass-Stutzen 11 ausgebildet. Am - bezogen auf die Transportrichtung 10 - stromabwärts gelegenen Deckel 7 ist ein Auslass-Stutzen 12 ausgebildet. Beide Stutzen 11, 12 sind unterhalb der Lager 5 angeordnet. Im Einlass-Stutzen 11 ist ein Einlass-Kanal 13 und im Auslass-Stutzen 12 ein Auslass-Kanal 14 ausgebildet. Im Gehäuse 1 ist ein Durchblas-Kanal 15 ausgebildet. Er wird nach unten durch eine Rinne 16 im unteren Bereich des Gehäuses 1 begrenzt, die durch zur Mittel-Achse 17 des Zellenrades 3 parallele Mantellinien gebildet wird. Diese Rinne 16 weist an den beiden den Deckeln 6,7 zugewandten Enden des Gehäuses 1 jeweils eine abfallende Rampe 18 bzw. 19 auf. Wie anschaulich aus Fig. 1 hervorgeht, erstrecken sich die Rampen 18, 19 etwa über einen Bereich von 5 bis 30 % und bevorzugt 10 bis 20 % der Länge des Gehäuses 1 zwischen den Deckeln 6, 7. Die Einlass-Rampe 18 fällt - entgegen der Transportrichtung 10 gesehen - von der Rinne 16 zum Einlass-Kanal 13 ab. Die Auslass-Rampe 19 fällt - in Transportrichtung 10 gesehen - von der Rinne 16 zum Auslass-Kanal 14 ab.

Die Rampen 18, 19 verlaufen im wesentlichen parallel und fluchtend mit den Kanälen 13, 14 in ihrem jeweiligen Bodenbereich. Es ist jedoch zu beachten, dass - wie aus Fig. 3 hervorgeht - am Übergang vom Einlass-Kanal 13 in die Einlass-Rampe 18 letztere geringfügig gegenüber dem Einlass-Kanal 13 zurückspringt. Die Einlass-Rampe 18 ist also gegenüber der benachbarten Einlass-Kante 20 des Einlass-Kanals 13 geringfügig, beispielsweise um ein Maß zurückgesetzt, das 0,5 bis 2,0 % des Durchmessers D des Innenraums 2 entspricht, sodass sich hier keine Störkante findet. In vergleichbarer Weise ist der Auslass-Kanal 14 des Auslass-Stutzens 12 an der Stoßstelle zur Auslass-Rampe 19 geringfügig zurückgesetzt, sodass die Auslass-Kante 21 der Auslass-Rampe 19 über den unmittelbar anschließenden Bereich des Auslass-Kanals 14 geringfügig, ebenfalls um ein Maß vorsteht, das beispielsweise 0,5 bis 2,0 % des Durchmessers D des Innenraums 2 entspricht, also keine Störkante bildet. Durch diese Ausgestaltung wird sichergestellt, dass beim Transport von abriebempfindlichen Schüttgütern, beispielsweise Kunststoff-Granulat, in Transport-Richtung 10 keine in den Transportweg ragenden Störkanten vorhanden sind.

Durch die Ausbildung der Einlass-Rampe 18 und der Auslass-Rampe 19 im Durchblas-Kanal 15 wird erreicht, dass auch im Bereich der Einmündung des Einlass-Stutzens 11 und im Bereich der Ausmündung des Auslass-Stutzens 2 ausreichend große Durchblas-Querschnitte vorhanden sind, sodass eine zuverlässige Entleerung der jeweiligen Kammer 22 des Zellenrades 3 erreicht wird.

Wenn - wie beim dargestellten bevorzugten Ausführungsbeispiel vorgesehen - die Deckel 6, 7 identisch ausgebildet sind, dann ist der Durchblas-Kanal 15 mit den Rampen 18, 19 nicht exakt spiegelsymmetrisch zu einer Mittel-Ebene 23 durch das Gehäuse ausgebildet, da die Rampe 18 in der Anflanschebene zwischen Einlass-Stutzen 11 und Gehäuse 1 etwas abgesenkt ist, während die Auslass-Rampe 19 in der Anflanschebene zwischen Auslass-Stutzen 12 und Gehäuse 1 etwas angehoben ist. Wenn der Durchblas-Kanal 15 dagegen völlig symmetrisch zu der Mittel-Ebene 23 ausgebildet sein soll, dann müssen die Deckel 6, 7 im Bereich des Einlass-Kanals 13 und des Auslass-Kanals 14 entsprechend, also unterschiedlich, ausgebildet sein.

## Patentansprüche

1. Durchblas-Schleuse
- mit einem Gehäuse (1) mit einem Innenraum (2), der an beiden Stirnseiten mit je einem Deckel (6, 7) abgeschlossen ist,
- mit einem eine Mittel-Achse (17) aufweisenden Zellenrad (3), das in dem Innenraum (2) drehantreibbar angeordnet ist,
- mit einem im unteren Bereich des Gehäuses (1) angeordneten, durch eine Rinne (16) im Gehäuse (1) begrenzten Durchblas-Kanal (15),
- mit einem am - bezogen auf eine Transport-Richtung (10) - stromaufwärts angeordneten Deckel (6) ausgebildeten, in den Durchblas-Kanal (15) einmündenden Einlass-Kanal (13), der - bezogen auf die Transport-Richtung (10) - zur Mittel-Achse (17) des Zellenrades (3) hin geneigt ist, und
- mit einem im - bezogen auf die Transport-Richtung (10) - stromabwärts gelegenen Deckel (7) ausgebildeten, aus dem Durchblas-Kanal (15) ausmündenden Auslass-Kanal (14), der - bezogen auf die Transport-Richtung (10) - von der Mittel-Achse (17) des Zellenrades (3) weg geneigt ist,
**dadurch gekennzeichnet,**
**dass** die Rinne (16) anschließend an den Einlass-Kanal (13) und im wesentlichen mit diesem fluchtend eine Einlass-Rampe (18) aufweist, und
**dass** die Rinne (16) unmittelbar vor dem Auslass-Kanal (14) eine im wesentlichen mit diesem fluchtende Auslass-Rampe (19) aufweist.

2. Durchblas-Schleuse nach Anspruch 1, **dadurch gekennzeichnet, dass** die Rampen (18, 19) sich jeweils über einen Bereich von 5 bis 30 % der Länge des Gehäuses (1) erstrecken.

3. Durchblas-Schleuse nach Anspruch 2, **dadurch gekennzeichnet, dass** die Rampen (18, 19) sich jeweils über einen Bereich von 10 bis 20 % der Länge des Gehäuses (1) erstrecken.

4. Durchblas-Schleuse nach einem der Ansprüche 1 bis 3, **dadurch gekennzeichnet,**
**dass** am Übergang vom Einlass-Kanal (13) zur Einlass-Rampe (18) die Einlass-Rampe (18) unter Bildung einer vorstehenden Einlass-Kante (20) am Einlass-Kanal (13) zurückspringt.

5. Durchblas-Schleuse nach einem der Ansprüche 1 bis 4, **dadurch gekennzeichnet,**
**dass** der Auslass-Kanal (14) am Übergang von der Auslass-Rampe (19) zum Auslass-Kanal (14) unter Bildung einer Auslass-Kante (21) an der Auslass-Rampe (19) zurückspringt.

6. Durchblas-Schleuse nach einem der Ansprüche 1 bis 5, insbesondere nach Anspruch 4 oder 5, **dadurch gekennzeichnet,**
**dass** die Deckel (6, 7) im Bereich des Einlass-Kanals (13) bzw. des Auslass-Kanals (14) identisch ausgebildet sind.

7. Durchblas-Schleuse nach Anspruch 4 oder 5, **dadurch gekennzeichnet, dass** die Einlass-Kante (20) und/oder die Auslass-Kante (21) jeweils um ein Maß zurückspringt, das 0,5 bis 2 % des Durchmessers (D) des Innenraums (2) beträgt.

## Claims

1. Blow-through sluice comprising a housing (1) with an interior (2) which is closed at both end faces by a respective cover (6, 7), comprising a cellular wheel (3) which has a centre axis (7) and is arranged such that it may be driven in rotation in the interior (2), comprising a blow-through channel (15) arranged in the lower region of the housing (1) and delimited by a groove (16) in the housing (1), comprising an inlet channel (13) which is constructed on the cover (6) arranged - based on a conveyance direction (10) - upstream, merges with the blow-through channel (15) and is inclined - based on the conveyance direction (10) - toward the centre axis (17) of the cellular wheel (3), and comprising an outlet channel (14) which is constructed in the cover (7) located - based on the conveyance direction (10) - downstream, issues from the blow-through channel (15) and is inclined - based on the conveyance direction (10) - away from the centre axis (17) of the cellular wheel (3), **characterised in that** the groove (16) comprises, adjacent to the inlet channel (13) and substantially flush therewith, an inlet ramp (18) and **in that** the groove (16) comprises, immediately before the outlet channel (14), an outlet ramp (19) substantially flush therewith.

2. Blow-through sluice according to claim 1, **characterised in that** the ramps (18, 19) each extend over a range of from 5 to 30 % of the length of the housing (1).

3. Blow-through sluice according to claim 2, **characterised in that** the ramps (18, 19) each extend over a range of from 10 to 20 % of the length of the housing (1).

4. Blow-through sluice according to any one of claims 1 to 3, **characterised in that** at the point of transition from the inlet channel (13) to the inlet ramp (18), the inlet ramp (18) is set back to form a protruding inlet edge (20) on the inlet channel (13).

5. Blow-through sluice according to any one of claims 1 to 4, **characterised in that** at the point of transition from the outlet ramp (19) to the outlet channel (14), the outlet channel (14) is set back to form an outlet edge (21) on the outlet ramp (19).

6. Blow-through sluice according to any one of claims 1 to 5, in particular according to either claim 4 or claim 5, **characterised in that** the covers (6, 7) in the region of the inlet channel (13) of the outlet channel (14) are identical in their construction.

7. Blow-through channel according to either claim 4 or claim 5, **characterised in that** the inlet edge (20) and/or the outlet edge (21) is in each case set back by an amount that is from 0.5 to 2 % of the diameter (D) of the interior (2).

## Revendications

1. Vanne de décharge
- avec un carter (1) comprenant un compartiment intérieur (2) fermé par un couvercle (6, 7) à ses deux extrémités frontales,
- avec une roue cellulaire (3) présentant un axe central (17) disposée dans le compartiment intérieur (2) où elle est entraînable en rotation,
- avec un canal de décharge (15) disposé dans la partie inférieure du carter (1), limité par une gouttière (16) du carter (1),
- avec un canal d'admission (13) formé sur le couvercle (6) disposé en amont - relativement à un sens de transport (10), débouchant dans le canal de décharge (15) et montant - relativement au sens de transport (10) - vers l'axe central (17) de la roue cellulaire (3),
- et avec un canal de sortie (14) formé sur le couvercle (7) disposé en aval - relativement au sens de transport (10), raccordé au canal de décharge (15) et descendant - relativement au sens de transport (10) - de l'axe central (17) de la roue cellulaire (3),
**caractérisée**
**en ce que** la gouttière (16) comporte, à la suite du canal d'admission (13) et affleurant sensiblement celui-ci, une rampe d'admission (18), et en ce que la gouttière (16) comporte directement devant le canal de sortie (14) une rampe de sortie (19) affleurant sensiblement celui-ci.

2. Vanne de décharge selon la revendication 1, **caractérisée**
**en ce que** les rampes (18, 19) s'étendent chacune sur une partie de la longueur du carter (1), comprise entre 5 et 30 % de celle-ci.

3. Vanne de décharge selon la revendication 2, **caractérisée**
**en ce que** les rampes (18, 19) s'étendent chacune sur une partie de la longueur du carter (1), comprise entre 10 et 20 % de celle-ci.

4. Vanne de décharge selon l'une des revendications 1 à 3, **caractérisée**
**en ce qu'**au passage du canal d'admission (13) à la rampe d'admission (18), la rampe d'admission (18) forme un bord d'admission saillant (20) par retrait contre le canal d'admission (13).

5. Vanne de décharge selon l'une des revendications 1 à 4, **caractérisée**
**en ce qu'**au passage de la rampe de sortie (19) au canal de sortie (14), le canal de sortie (14) forme un bord de sortie (21) par retrait contre la rampe de sortie (19).

6. Vanne de décharge selon l'une des revendications 1 à 5, notamment selon la revendication 4 ou 5, **caractérisée**
**en ce que** les couvercles (6, 7) sont de forme identique au niveau du canal d'admission (13) et du canal de sortie (14).

7. Vanne de décharge selon la revendication 4 ou 5, **caractérisée**
**en ce que** la cote du retrait du bord d'admission (20) et/ou du bord de sortie (21) représente de 0,5 à 2 % du diamètre (D) du compartiment intérieur (
